# EUROPÄISCHE PATENTSCHRIFT

(11) **EP 1 380 962 B1**
(45) Veröffentlichungstag und Bekanntmachung des Hinweises auf die Patenterteilung: **25.04.2012**
(21) Anmeldenummer: 03012976.1
(22) Anmeldetag: 07.06.2003
(51) Int. Cl.: G06F 15/17

(54) **Vorrichtung und Verfahren zur Datenkommunikation**
Apparatus and method for data communication
Appareil et méthode pour la communication de données

(30) Priorität: 11.07.2002 DE 10231424
(43) Veröffentlichungstag der Anmeldung: 14.01.2004
(73) Patentinhaber: Synopsys, Inc., Mountain View, CA 94043 (US)
(72) Erfinder: Mauersberger, Heiko, 99099 Erfurt (DE)
(74) Vertreter: Schlimme, Wolfram

(56) Entgegenhaltungen:
- EP-A1- 0 165 185
- US-A- 5 457 683
- US-A- 5 687 320
- US-B1- 6 256 722
- DIRK LEINENBACH: "Implementierung eines maschinell verifizierten Prozessors" DIPLOMARBEIT, [Online] Juni 2002 (2002-06), Seiten 1-73, XP002340615 Universität des Saarlandes Gefunden im Internet: URL:http://busserver.cs.uni-sb.de/publikat ionen/Le02.pdf> [gefunden am 2005-07-12]

## Beschreibung

Die Erfindung betrifft eine Vorrichtung und ein Verfahren zur Datenkommunikation zwischen einer ersten Host-Einrichtung oder einer weiteren Host-Einrichtung und zumindest einer Client-Einrichtung entlang eines gemeinsamen Übertragungswegs. Eine Host-Einrichtung ist beispielsweise ein Host-Computer (Personal Computer, Workstation) und eine Client-Einrichtung kann eine beliebige Hardware-Anwendung sein (zum Beispiel FPGA oder ASIC).

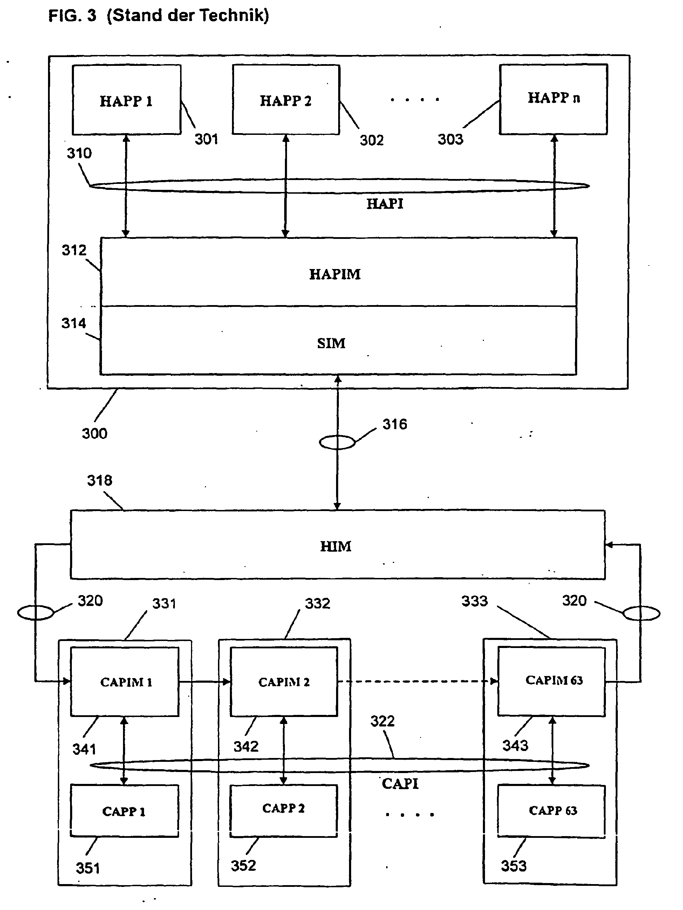

Fig. 3 zeigt ein Kommunikationssystem der Anmelderin der vorliegenden Anmeldung, welches unter der Marke UMRBus bekannt ist. Dieses Kommunikationssystem erlaubt die einfache Übertragung von Daten und/oder Signalen zwischen einer Host-Einrichtung oder einem Host-Computer (300) und zugeordneter Hardware (Clients), beispielsweise ASICs oder FPGAs. Unterschiedliche Softwareanwendungen können mit ihren entsprechenden Hardwareanwendungen über unabhängige virtuelle Kanäle kommunizieren, welche dasselbe Hardwareinterface zwischen dem Host-Computer (300) und der Client-Hardware (331, 332, 333) benutzen. Dieses Kommunikationssystem stellt eine einfache standardisierte Schnittstelle zwischen dem Host-Computer (300) und zumindest einem Client (331, 332, 333) dar. Dieser Client (331, 332, 333) kann sowohl eine Softwareapplikation als auch eine Hardwareapplikation sein.

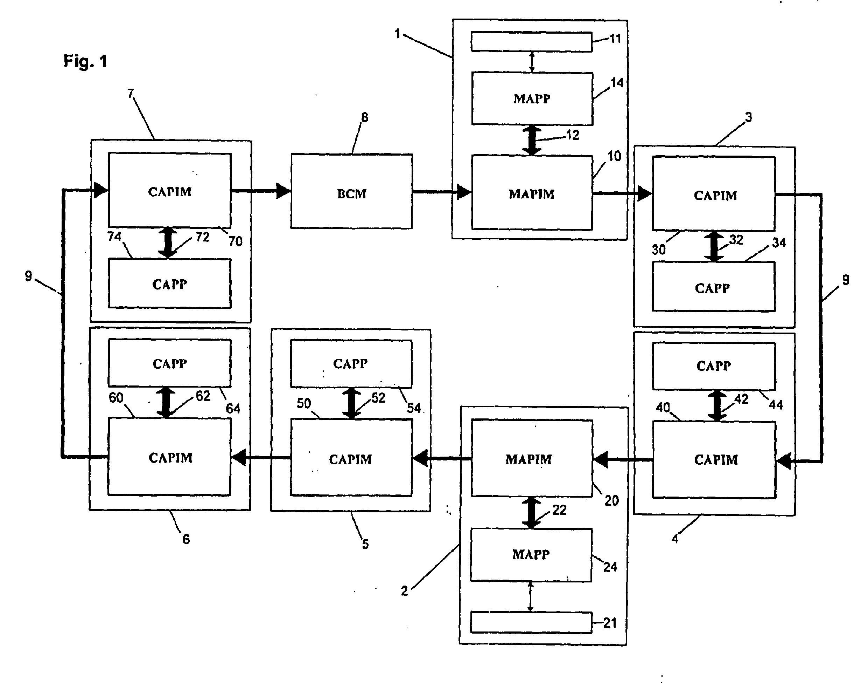

Einzelne Host-Anwendungen (301, 302, 303), die in Fig. 1 mit "HAPP" (Host Application) bezeichnet sind, sind über ein "HAPI" genanntes Host Application Interface, also eine Host-Anwendungs-Schnittstelle (310), mit einem Host Application Interface Module "HAPIM" verbunden, welches auch als Host-Anwendungs-Schnittstelleneinheit (312) bezeichnet wird. Die Host-Anwendung ist ein Programm, das über die Host-Anwendungs-Schnittstelle mit einer oder mehreren Client-Anwendung(en) Daten austauscht. Das Host Application Interface Module (312) ist eine Softwarebibliothek, die eine Vielzahl von Funktionen und Befehlen zum Zugriff auf das Kommunikationssystem bereitstellt. Eine Host-Anwendungs-Schnittstelle HAPI ist eine Schnittstelle, auf welcher Host-Anwendungen aufsetzen.

Das Host Application Interface Module (312) steht unmittelbar in Verbindung mit einem Software Interface Module "SIM", also einer Software-Schnittstelleneinheit (314), die in der Regel dem betriebssystemspezifischen Gerätetreiber entspricht. Eine Host-Anwendungs-Schnittstelleneinheit HAPIM stellt die Host-Anwendungs-Schnittstelle bereit und überträgt in Zusammenarbeit mit der Software-Schnittstelleneinheit Daten von und zu den Clients.

Das Software Interface Module (314) steht über eine standardisierte Schnittstellenverbindung (316), zum Beispiel PCI oder RS232, mit einem Hardware Interface Module "HIM" (Hardware-Schnittstelleneinheit) (318) in Verbindung. Das Hardware Interface Module (318) stellt die Gegenstelle zum Software Interface Module (314) in Hardware dar. Dieses Hardware Interface Module (318) kann beispielsweise ein PCI-Controller und eine Interfacekomponente zwischen dem PCI-Controller und einem Daten-Bus aufweisen. Die Software-Schnittstelleneinheit SIM vollzieht den Datenaustausch zwischen der Host-Anwendungs-Schnittstelleneinheit HAPIM und der Hardware-Schnittstelleneinheit HIM.

Ein wesentliches Merkmal des Hardware Interface Moduls (318) ist, daß es auf der der Software abgewandten Seite immer einen physikalischen Daten-Bus (320) bereitstellt. Dieser Daten-Bus (320) verbindet das Hardware Interface Module (318) mit einer Mehrzahl von Client Application Interface Modulen "CAPIM", auch Client-Anwendungs-Schnittstelleneinheiten (341, 342, 343) genannt. Dabei stellt der Daten-Bus (320) eine Ringverbindung zwischen den darin eingebundenen Client-Anwendungs-Schnittstelleneinheiten (341, 342, 343) und dem Hardware Interface Module (318) dar.

Die Hardware-Schnittstelleneinheit HIM tauscht Daten mit der Software-Schnittstelleneinheit SIM aus und stellt den Clients den Daten-Bus zur Verfügung.

Jedes Client Application Interface Module (341, 342, 343) stellt eine Art Knoten dar, welcher in den physikalischen Daten-Bus (320) eingefügt ist. Jedes Client Application Interface Module (341, 342, 343) steht über ein Client Application Interface "CAPI", auch Client-Anwendungs-Schnittstelle (322) genannt, mit einer Client Application "CAPP", also einer Client-Anwendung (351, 352, 353), in Verbindung. Jedes Client Application Interface Module (341, 342, 343) besitzt eine eigene Adresse und eine Typkennung und stellt der Client Application (351, 352, 353) das Client Application Interface (322) zur Verfügung.

In der in Fig. 3 gezeigten Vorrichtung wird die gesamte Datenkommunikation vom Host-Computer (300) gesteuert.

Datenaustausch kann dabei jeweils nur zwischen einem Hardware Interface Module (318) und jeweils einem Client Application Interface Module (341, 342, 343) stattfinden. Es ist somit lediglich eine Kommunikation zwischen dem Host-Computer (300) und den Client-Anwendungen (351, 352, 353) möglich, nicht jedoch innerhalb der im gezeigten Beispiel als Hardware ausgebildeten Client-Anwendungen (351, 352, 353). Darüber hinaus kann diese bekannte Vorrichtung zur Datenkommunikation nicht in Systemen mit mehreren Host-Computern eingesetzt werden.

Die US 5,687,320 A offenbart eine Vorrichtung zur Datenkommunikation zwischen einer ersten Host-Einrichtung oder einer weiteren Host-Einrichtung und zumindest einer Client-Einrichtung entlang eines als Ring-Bus ausgeführten Übertragungswegs. Ein gesondertes Bus-Steuerungsmodul ist nicht vorgesehen. Es wird dort darauf hingewiesen, dass bei der Übertragung von UDP-Botschaften keine Gewähr dafür besteht, dass keine Nachrichtenkollisionen auf dem Bus auftreten. Aus diesem Grund werden derartige Botschaften nur auf untergeordneten Sub-Netzen ausgesandt.

Die EP 0 165 185 A1 betrifft ein Verfahren und eine Vorrichtung zur Übertragung von Daten zwischen mehreren miteinander verbundenen Stationen. Die Stationen hören permanent den Übertragungsweg ab, um die Aktivitäten auf dem gemeinsamen Bus zu überprüfen. Wenn eine zu lange Zeit ohne Aktivität auf den Bus verstrichen ist, wird dies dahingegehend gewertet, dass der auf dem Bus laufenden Token verloren gegangen ist. Ist dies der Fall, versuchen alle am Bus angeschlossenen Stationen gleichzeitig, den Token zu regenerieren, jedoch erhält nur eine Station das Recht, einen neuen Token in Umlauf zu setzen. Es stehen somit bei diesem Verfahren alle am Bus angeschlossenen Stationen in einem Wettbewerb darum, den neuen Token zu erzeugen und das Recht zu erwerben, diesen Token auszusenden. Bis auf jene Station, die letztendlich das Recht erhält, den neuen Token auszusenden, sind alle anderen Stationen vergeblich mit der Arbeit befasst, den verloren gegangenen Token zu regenerieren.

Aufgabe der vorliegenden Erfindung ist es, eine Vorrichtung zur Datenkommunikation zwischen einer ersten Host-Einrichtung oder einer weiteren Host-Einrichtung und zumindest einer Client-Einrichtung entlang eines gemeinsamen Übertragungswegs sowie ein entsprechendes Verfahren zur Datenkommunikation zu schaffen, wobei eventuell auftretende Blockaden des Übertragungswegs auf effiziente Weise und zuverlässig automatisch aufgehoben werden.

Die die Vorrichtung betreffende Aufgabe wird durch die im Patentanspruch 1 angegebenen Merkmale gelöst.

Mit dieser erfindungsgemäßen Vorrichtung wird eine Datenkommunikation auf einem gemeinsamen Übertragungsweg auch dann ermöglicht, wenn mehrere Host-Einrichtungen vorgesehen sind. Beispielsweise kann diese Vorrichtung innerhalb von FPGA basierenden Bildverarbeitungssystemen benutzt werden, um die im FPGA implementierte Bildverarbeitung zu steuern, auch wenn das Bildverarbeitungssystem einen eigenen integrierten Prozessor, also eine eigene Host-Einrichtung, aufweist, die parallel zur übergeordneten Host-Einrichtung Parameter unter Benutzung des Daten-Buses ändern möchte. Die Übertragungs-Steuereinheit in der erfindungsgemäßen Vorrichtung übernimmt dabei die Aufgabe der Steuerung, welche der Host-Einrichtung in einem bestimmten Zeitraum oder für eine bestimmte Datenmenge den Übertragungsweg benutzen darf. Das bei der erfindungsgemäßen Vorrichtung vorgesehene Bus-Steuerungsmodul übernimmt als Übertragungs-Steuereinheit die Aufgabe der Kontrolle und Steuerung des Verkehrs auf dem Daten-Bus und prüft permanent das Vorhandensein von auf dem Daten-Bus umlaufenden Arbitrierungs-Frames. Stellt das Bus-Steuerungsmodul durch Zeitüberschreitung des Intervalls zwischen zwei Arbitrierungs-Frames fest, dass der Bus blockiert ist, so wird automatisch ein neuer Arbitrierungs-Frame vom Daten-Bus-Steuerungsmodul generiert und auf den Bus geschickt, um diesen dadurch wieder freizugeben.

Vorteilhafte Weiterbildungen dieser Vorrichtung sind in den Ansprüchen 2 und 3 angegeben.

Vorzugsweise weisen die erste und/oder die weitere Host-Einrichtung, insbesondere die Host-Anwendung, einen Prozessor auf.

Die das Verfahren betreffende Aufgabe wird durch die im Anspruch 4 angegebenen Verfahrensschritte gelöst.

Wesentliches Merkmal dieses erfindungsgemäßen Verfahrens ist das Vorsehen und Übertragen einer Arbitrierungsinformation auf dem Übertragungsweg entlang der geöffneten Kommunikationsverbindung, wobei die Arbitrierungsinformation dafür sorgt, daß jeweils immer nur eine Host-Einrichtung Zugriff auf den Übertragungsweg erhält. Im Fall einer Blockade des Daten-Bus' wird dieser automatisch wieder freigegeben. Dafür sorgt die Überwachung des Daten-Bus' durch ein Bus-Steuerungsmodul in der Weise, dass die Takte zwischen zwei Durchläufen des Arbitrierungs-Frames gezählt werden, wobei ein neuer Arbitrierungs-Frame mit deaktiviertem Aktivitäts-Bit vom Bus-Steuerungsmodul ausgesendet wird, wenn die Anzahl der gezählten Takte einen vorgegebenen Wert übersteigt.

Bevorzugte Ausbildungen und Weiterbildungen des erfindungsgemäßen Verfahrens sind in den Ansprüchen 7 bis 10 angegeben.

Die Erfindung wird nachfolgend anhand eines Beispiels unter Bezugnahme auf die Zeichnung näher erläutert; in dieser zeigt:
- **Fig. 1**: die schematische Darstellung einer erfindungsgemäßen Vorrichtung zur Datenkommunikation;
- **Fig. 2**: ein Flußdiagramm einer Datenkommunikation gemäß dem erfindungsgemäßen Verfahren und
- **Fig. 3**: den schematischen Aufbau einer Vorrichtung zur Datenkommunikation gemäß dem Stand der Technik.

Die Fig. 1 zeigt eine Vorrichtung zur Datenkommunikation gemäß der vorliegenden Erfindung mit zwei Host-Einrichtungen 1, 2. Die erste Host-Einrichtung 1 weist beispielsweise einen Personalcomputer (PC) 11 auf und die zweiten Host-Einrichtung 2 weist beispielsweise einen in eine Hardware-Applikation integrierten Prozessor (Embedded Processor) 21 auf. Eine derartige Hardware-Anwendung mit integriertem Prozessor kann beispielsweise ein ASIC oder ein FPGA mit einem integrierten Prozessor sein. Beispielsweise werden derartige FPGAs in Bildverarbeitungssystemen eingesetzt. So werden zum Beispiel Parameter für einen Framegrabber vom ersten Host-Computer in die FPGA-Hardware übertragen, die den integrierten Prozessor aufweist.

Sowohl der erste Host-Computer 1 als auch der zweite Host-Computer 2 sind jeweils mit einer Haupt-Anwendung "MAPP" (Master Application) 14, 24 versehen, die über eine Haupt-Anwendungs-Schnittstelleneinheit "MAPIM" (Master Application Interface Module) in einen Daten-Bus 9 eingebunden ist.

Die Haupt-Anwendung 14, 24 ist in diesem Beispiel eine in Hardware implementierte Anwendung, die über eine Haupt-Anwendungs-Schnittstelle "MAPI" (Master Application Interface) 12, 22 mit der Haupt-Anwendungs-Schnittstelleneinheit 10, 20 verbunden ist und über diese mit dem Daten-Bus 9 in Verbindung steht.

Weiterhin sind beispielhaft fünf Client-Einrichtungen 3, 4, 5, 6, 7 vorgesehen, die jeweils eine Client-Anwendung "CAPP" (Client Application) 34, 44, 54, 64, 74 aufweisen. Jede Client-Anwendung steht über eine Client-Anwendungs-Schnittstelle "CAPI" (Client Application Interface) 32, 42, 52, 62, 72 mit einer Client-Anwendungs-Schnittstelleneinheit "CAPIM" (Client Application Interface Module) 30, 40, 50, 60, 70 in Verbindung, welche jeweils in den Daten-Bus 9 eingebunden ist.

Eine Client-Anwendung ist hier eine in Hardware implementierte Anwendung, die über die Client-Anwendungs-Schnittstelle 32, 42, 52, 62, 72 Daten über den Daten-Bus 9 mit einem der Host-Computer 1, 2 austauscht. Dieser Datenaustausch wird von der entsprechenden Haupt-Anwendung 14, 24 gesteuert.

Die Client-Anwendungs-Schnittstelleneinheit 30, 40, 50, 60, 70 bildet jeweils die Schnittstelle zwischen dem Daten-Bus 9 und der jeweiligen Client-Anwendungs-Schnittstelle 32, 42, 52, 62, 72. Dem jeweiligen über diese Client-Anwendungs-Schnittstelle 32, 42, 52, 62, 72 mit dem Daten-Bus 9 verbundenen Client 3, 4, 5, 6, 7 beziehungsweise der auf diesen laufenden Client-Anwendung 34, 44, 54, 64, 74 werden nur jene Daten und Dienste zur Verfügung gestellt, die die jeweilige Client-Anwendung 34, 44, 54, 64, 74 betreffen.

In den Daten-Bus 9 ist ferner eine Übertragungs-Steuereinheit "BCM" (BUS Control Module) 8 eingebunden, die den Zugriff der einzelnen Haupt-Anwendungs-Schnittstelleneinrichtungen 10, 20 auf den Daten-Bus 9 verwaltet und die Daten-Bus-Interrupts überwacht.

Bei dieser erfindungsgemäßen Vorrichtung ist die Hardware-Schnittstellen-Einheit HIM nicht, wie im Stand der Technik gemäß Fig. 3 unmittelbar in den Daten-Bus eingebunden, sondern stellt die Daten über die Haupt-Anwendungs-Schnittstelleneinheit 10, 20 auf den Daten-Bus 9 zur Verfügung. Die Hardware-Schnittstelleneinheit HIM kann dabei durch die jeweilige Haupt-Anwendung MAPP 14, 24 gebildet sein.

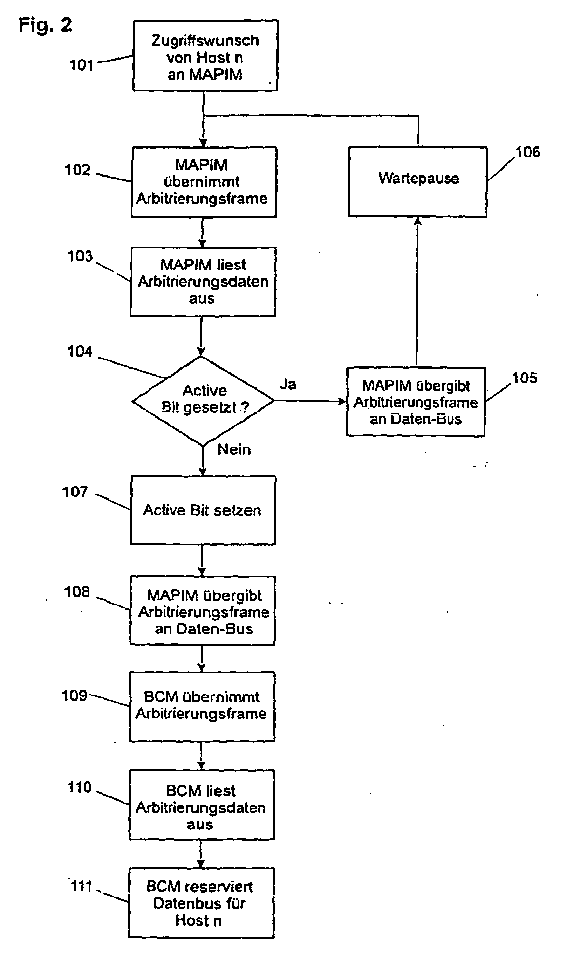

Anhand der Fig. 2 wird nachfolgend die Zugriffsverwaltung einer Host-Einrichtung auf eine Client-Einrichtung beschrieben.

Zu Betriebsbeginn sendet die Übertragungs-Steuereinheit BCM 8 eine Arbitrierungsinformation, die ständig auf dem Daten-Bus 9 zur Verfügung steht. Diese Arbitrierungsinformation ist beispielsweise als Arbitrierungs-Frame ausgebildet, der eine Kopfinformation (Frame Header) und ein Datenwort enthält.

Möchte ein Host-Computer auf den Daten-Bus zugreifen und über diesen Daten an eine Client-Anwendung übertragen oder mit dieser austauschen, so gibt er diesen Zugriffswunsch im Schritt 101 an die ihm zugeordnete Haupt-Anwendungs-Schnittstelleneinheit MAPIM. Die Haupt-Anwendungs-Schnittstelleneinheit MAPIM übernimmt dann im Schritt 102 den auf dem Daten-Bus 9 umhergereichten Arbitrierungs-Frame und liest aus diesem im Schritt 103 die Arbitrierungsdaten aus. In den Arbitrlerungsdaten ist ein Aktivitäts-Bit enthalten, welches angibt, ob der Daten-Bus 9 derzeit von einer anderen Anwendung benutzt wird. Ist dieses Aktivitäts-Bit nicht gesetzt, so bedeutet dies, daß der Daten-Bus 9 frei ist.

Im Schritt 104 prüft die Haupt-Anwendungs-Schnittstelleneinheit MAPIM nun, ob das Aktivitäts-Bit gesetzt ist oder nicht. Ist das Aktivitäts-Bit gesetzt, also der Datenbus nicht frei, übergibt das MAPIM den Arbitrierungs-Frame wieder an den Daten-Bus im Schritt 105 und übernimmt diesen nach einer Wartepause 106 wieder, um die Schritte 102 bis 104 zu wiederholen.

Wird jedoch im Schritt 104 festgestellt, daß das Aktivitäts-Bit nicht gesetzt ist, das heißt, daß der Daten-Bus frei ist, so setzt die Haupt-Anwendungs-Schnittstelleneinheit MAPIM ihrerseits im Schritt 107 das Aktivitäts-Bit und zeigt damit an, daß es auf den Daten-Bus 9 zugreifen möchte. Der Arbitrierungs-Frame wird dann im Schritt 108 wieder an den Daten-Bus 9 übergeben und läuft dort weiter um bis er zur Übertragungs-Steuereinrichtung BCM 8 gelangt. Diese übernimmt im Schritt 109 den Arbitrierungsblock, liest im Schritt 110 die Arbitrierungsdaten aus und reserviert im Schritt 111 den Daten-Bus 9 für den anfragenden Host-Computer.

Eine Haupt-Anwendungs-Schnittstelleneinheit MAPIM darf den Daten-Bus somit nur verwenden, wenn es den Arbitrierungs-Frame erhält und in diesem das Aktivitäts-Bit nicht bereits durch eine andere Haupt-Anwendungs-Schnittstelleneinheit gesetzt worden ist. Der Arbitrierungs-Frame wird von der Übertragungs-Steuereinrichtung BCM empfangen und nicht wieder an den Daten-Bus zurückgegeben, wenn das Aktivitäts-Bit gesetzt ist. Die Haupt-Anwendungs-Schnittstelleneinheit MAPIM, die das Aktivitäts-Bit gesetzt hat, kann jetzt seine Daten über den Daten-Bus 9 übertragen.

Nach Beendigung dieser freigegebenen Datenkommunikation über den Daten-Bus 9 oder nach Ablauf des vorgegebenen Zeitintervalls oder des vorgegebenen Datenvolumens für die Datenübertragung sendet die Haupt-Anwendungs-Schnittstelleneinheit MAPIM den Arbitrierungs-Frame erneut, jedoch jetzt mit deaktiviertem Aktivitäts-Bit, wodurch angezeigt wird, daß der Daten-Bus 9 jetzt wieder frei ist. Auf diese Weise ist sichergestellt, daß nur jeweils eine Haupt-Anwendungs-Schnittstelleneinheit MAPIM auf dem Daten-Bus 9 aktiv ist und es nicht zu Überlagerungen von Datenübertragungen auf dem Daten-Bus kommt. Die Übertragungs-Steuereinrichtung BCM 8 überwacht dabei den Daten-Bus 9 in der Form, daß sie durch einen Zähler die Takte zwischen dem Durchlauf zweier Arbitrierungs-Frames zählt. Übersteigt der Zählerwert den vorgegebenen Grenzwert der Anzahltakte pro Zugriff so wird daraus geschlossen, daß kein Arbitrierungs-Frame empfangen wurde. Dieses kann beispielsweise durch eine Unterbrechung des Daten-Bus 9 oder durch einen Reset der gesamten Vorrichtung geschehen. In diesem Fall sendet die Überwachungs-Steuereinrichtung 8 erneut einen Arbitrierungs-Frame mit deaktivierten Aktivitäts-Bit und gibt so den blockierten Daten-Bus 9 automatisch wieder frei.

Wird auf dem Daten-Bus ein Interrupt angezeigt, so übernimmt die Übertragungs-Steuereinrichtung BCM 8 den Daten-Bus 9 und sendet einen Interrupt-Frame. Wurde der Interrupt-Frame erfolgreich übertragen, so sendet die Übertragungs-Steuereinrichtung BCM 8 einen sogenannten "Interrupt Information Frame". Mit diesem "Interrupt Information Frame" werden die Haupt-Anwendungs-Schnittstelleneinheit MAPIM über den Interrupt-Status der einzelnen Client-Anwendungs-Schnitcscelleneinheiten CAPIM informiert und können diese Information an die jeweilige Haupt-Anwendung MAPP zur weiteren Verarbeitung weiterleiten. Auf diese Weise wird sichergestellt, daß alle Host-Computer über Interrupts informiert werden.

Auf diese Weise wird eine erfindungsgemäße Vorrichtung zur Datenkommunikation mit einem darauf laufenden Datenkommunikationsverfahren mit einem multimasterfähigen Daten-Bus 9 geschaffen.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Host-Computer
- 2: Host-Einrichtung
- 3: Client-Einrichtung
- 4: Client-Einrichtung
- 5: Client-Einrichtung
- 6: Client-Einrichtung
- 7: Client-Einrichtung
- 8: Übertragungs-Steuereinheit BCM
- 9: Daten-Bus
- 10: Haupt-Anwendungs-Schnittstelleneinheit MAPIM
- 12: Haupt-Anwendungs-Schnittstelle MAPI
- 14: Haupt-Anwendung MAPP
- 20: Haupt-Anwendungs-Schnittstelleneinheit MAPIM
- 22: Haupt-Anwendungs-Schnittstelle MAPI
- 24: Haupt-Anwendung MAPP
- 30: Client-Anwendungs-Schnittstelleneinheit CAPIM
- 32: Client-Anwendungs-Schnittstelle CAPI
- 34: Client-Anwendung CAPP
- 40: Client-Anwendungs-Schnittstelleneinheit CAPIM
- 42: Client-Anwendungs-Schnittstelle CAPI
- 44: Client-Anwendung CAPP
- 50: Client-Anwendungs-Schnittstelleneinheit CAPIM
- 52: Client-Anwendungs-Schnittstelle CAPI
- 54: Client-Anwendung CAPP
- 60: Client-Anwendungs-Schnittstelleneinheit CAPIM
- 62: Client-Anwendungs-Schnittstelle CAPI
- 64: Client-Anwendung CAPP
- 70: Client-Anwendungs-Schnittstelleneinheit CAPIM
- 72: Client-Anwendungs-Schnittstelle CAPI
- 74: Client-Anwendung CAPP

- 101, 102, 103, 104, 105, 106, 107, 108, 109, 110, 111:: Verfahrensschritte
- 300: Host-Einrichtung
- 301: Host-Anwendung HAPP
- 302: Host-Anwendung HAPP
- 303: Host-Anwendung HAPP
- 310: Host-Anwendungs-Schnittstelle HAPI
- 312: Host-Anwendungs-Schnittstelleneinheit HAPIM
- 314: Software-Schnittstelleneinheit SIM
- 316: Schnittstellenverbindung
- 318: Host-Schnittstelleneinheit
- 320: Daten-Bus
- 322: Client-Anwendungs-Schnittstelle CAPI
- 331: Client-Einrichtung
- 332: Client-Einrichtung
- 333: Client-Einrichtung
- 341: Client-Anwendungs-Schnittstelleneinheit CAPIM
- 342: Client-Anwendungs-Schnittstelleneinheit CAPIM
- 343: Client-Anwendungs-Schnittstelleneinheit CAPIM
- 351: Client-Anwendung CAPP
- 352: Client-Anwendung CAPP
- 353: Client-Anwendung CAPP

## Patentansprüche

1. Vorrichtung zur Datenkommunikation zwischen einer ersten Host-Einrichtung oder einer weiteren Host-Einrichtung und zumindest einer Client-Einrichtung entlang eines gemeinsamen Übertragungswegs, wobei die Vorrichtung Folgendes aufweist:
- eine erste Host-Einrichtung (1), die eine Host-Anwendung (11) umfaßt;
- zumindest eine weitere Host-Einrichtung (2), die eine Host-Anwendung (21) umfaßt;
- zumindest eine Client-Einrichtung (3, 4, 5, 6, 7), die eine Client-Anwendung (34, 44 ,54, 64, 74) umfaßt;
- ein Bus-Steuerungsmodul (8);
- wobei die Host-Einrichtungen (1, 2) jeweils ein Haupt-Anwendungs-Schnittstellenmodul (10, 20) aufweisen, das in den Übertragungsweg (9) eingebunden ist;
- wobei die Host-Einrichtungen (1, 2) jeweils ein Haupt-Anwendungs-Modul (14, 24) aufweisen, das die jeweilige Host-Anwendung (11, 21) mit dem zugeordneten Haupt-Anwendungs-Schnittstellenmodul (10, 20) verbindet;
- wobei jede Client-Einrichtung (3, 4, 5, 6, 7) ein Client-Anwendungs-Schnittstellenmodul (30, 40, 50, 60, 70) aufweist, das in den Übertragungsweg (9) eingebunden ist und das mit der zugeordneten Client-Anwendung (34, 44, 54, 64, 74) verbunden ist;
- wobei der Übertragungsweg (9) als Daten-Bus implementiert ist, der eine Ringverbindung bildet;
- wobei das betreffende Haupt-Anwendungs-Schnittstellenmodul (10, 20) einer jeden Host-Einrichtung (1, 2) und das entsprechende Client-Anwendungs-Schnittstellenmodul (30, 40, 50, 60, 70) einer jeden Client-Einrichtung (3, 4, 5, 6, 7) durch den Daten-Bus zum Austausch von Daten und/oder Signalen miteinander verbunden sind;
- wobei das Bus-Steuerungsmodul (8) implementiert ist, um den Zugriff der Host-Einrichtungen (1, 2) zum Daten-Bus zu steuern;
- wobei das Bus-Steuerungamodul (8) in der Ringstruktur des Daten-Bus' vorgesehen und mit dem entsprechenden Haupt-Anwendungs-Schnittstellenmodul (10, 20) einer jeden Host-Einrichtung (1, 2) und dem entsprechenden Client-Anwendungs-Schnittstellenmodul einer jeden Client-Einrichtung (3, 4, 5, 6, 7) durch den Daten-Bus zum Austausch von Daten und/oder Signalen entlang einer geöffneten Kommunikationsverbindung untereinander verbunden ist; und
- wobei das Bus-Steuerungsmodul (8) mit einem Zähler versehen ist, der die Takte zwischen den Durchläufen von zwei Arbitrierungsinformation enthaltenden Arbitrierungs-Frames zählt, die auf dem Datenbus weitergereicht werden, wobei die Arbitrierungsinformation Daten enthält aufgrund derer der Daten-Bus für ein vorgegebenes Zeitintervall oder für ein vorgegebenes Datenvolumen für eine nachfolgende Datenübertragung auf dem Daten-Bus entlang der geöffneten Kommunikationsverbindung reserviert wird, und
- wobei das Bus-Steuerungsmodul (8) so ausgebildet ist, dass es im Fall dass die Anzahl den gezählten Takte einen vorgegebenen Wert übersteigt, einen neuen Arbitrierungs-Frame aussendet, um so einen blockierten Daten-Bus wieder freizugeben.

2. Vorrichtung nach Anspruch 1,
**dadurch gekennzeichnet,**
- **dass** das Bus-Steuerungsmodul (8) mit einem Komparator versehen ist, der die Anzahl der verstrichenen Takte zwischen den beiden Arbitrierungs-Frames mit einer vorgegebenen Ziel-Anzahl von Takten vergleicht und
- **dass** das Bus-Steuerungsmodul (8) dann, wenn die Anzahl der verstrichenen Takte die vorgegebene Ziel-Anzahl übersteigt, einen neuen Arbitrierungs-Frame mit deaktiviertem Aktivitäts-Bit sendet, um den blockierten Daten-Bus wieder freizugeben.

3. Vorrichtung nach Anspruch 1 oder 2,
**dadurch gekennzeichnet,**
**dass** die Host-Anwendungen (11, 21) der ersten und/oder weiteren Host-Einrichtung(en) (1, 2) einen Prozessor aufweisen.

4. Verfahren zur Datenkommunikation in einer Vorrichtung zur Datenkommunikation nach Anspruch 1, 2 oder 3 zwischen einer ersten Host-Einrichtung (1) oder einer weiteren Host-Einrichtung (2) und zumindest einer Client-Einrichtung (3, 4, 5, 6, 7) entlang eines gemeinsamen, als ein eine Ringverbindung bildender Daten-Bus ausgestalteten Übertragungswegs (9), wobei das Verfahren die folgenden Schritte aufweist:
- Öffnen einer Kommunikationsverbindung zwischen einer auf der Host-Einrichtung laufenden Host-Anwendung und einer auf der Client-Anwendung laufenden Client-Anwendung;
- Übertragen von Arbitrierungsinformation auf dem Daten-Bus entlang der geöffneten Kommunikationsverbindung, wobei die Arbitrierungsinformation Daten enthält, aufgrund derer der Daten-Bus für ein vorgegebenes Zeitintervall oder für ein vorgegebenes Datenvolumen für eine nachfolgende Datenübertragung auf dem Daten-Bus entlang der geöffneten Kommunikationsverbindung reserviert wird;
- Übertragen von Daten und/oder Signalen zwischen der Host-Anwendung und der Client-Anwendung und/oder zwischen der Client-Anwendung und der Host-Anwendung auf dem Daten-Bus entlang der geöffneten Kommunikationsverbindung;
- wobei der Durchlauf eines die Arbitrierungsinformation enthaltenden Arbitrierungs-Frames auf dem Daten-Bus von einem Bus-Steuerungsmodul derart überwacht wird, dass die Takte zwischen zwei Durchläufen des Arbitrierungs-Frames gezählt werden, und
- wobei ein neuer Arbitrierungs-Frame mit deaktiviertem Aktivitäts-Bit vom Bus-Steuerungsmodul ausgesendet wird, wenn die Anzahl der gezählten Takte einen vorgegebenen Wert übersteigt, um so einen Blockierten Daten-Bus wieder freizugeben.

5. Verfahren nach Anspruch 4,
**dadurch gekennzeichnet,**
**dass** die Arbitrierungsinformation als Arbitrierungsblock übertragen wird, wobei ein Arbitrierungsblock Arbitrierungsdaten aufweist, die Information über die Länge des vorgegebenen Zeitintervalls oder über den Umfang des vorgegebenen Datenvolumens für die nachfolgende Datenübertragung umfassen.

6. Verfahren nach Anspruch 5,
**dadurch gekennzeichnet,**
**dass** der Arbitrierungsblock Aktivitätsdaten aufweist, die Information über den aktuellen Zustand des Übertragungswegs umfasst, aus welcher darauf geschlossen werden kann, ob der Übertragungsweg aktuell zur Datenübertragung genutzt wird.

7. Verfahren nach Anspruch 4,
**dadurch gekennzeichnet,**
**dass** bei einem Zugriffswunsch einer Host-Anwendung auf den Übertragungsweg folgende Schritte durchgeführt werden:
- das der Host-Anwendung zugeordnete Hauptanwendungs-Schnittstellenmodul übernimmt den auf dem Übertragungsweg präsenten Arbitrierungsblock,
- liest die Aktivitätsdaten aus,
- prüft anhand der Aktivitätsdaten, ob der Übertragungsweg aktuell zur Datenübertragung frei ist,
- schreibt, falls der Übertragungsweg frei ist, Aktivitätsdaten in den Arbitrierungsblock, die eine Benutzung des Übertragungswegs durch die Host-Anwendung anzeigen, und
- übergibt den Arbitrierungsblock über den Übertragungsweg an das Bus-Steuerungsmodul;
- woraufhin das Bus-Steuerungsmodul den Übertragungsweg für den Zugriff durch die Host-Anwendung reserviert.

8. Verfahren nach Anspruch 7,
**dadurch gekennzeichnet,**
**dass** nach Ablauf einer Datenübertragung die Aktivitätsdaten im Arbitrierungsblock vom Hauptanwendungs-Schnittstellenmodul wieder zurückgesetzt werden und somit der Übertragungsweg wieder freigegeben wird.

9. Verfahren nach Anspruch 4,
**dadurch gekennzeichnet,**
**dass** die Arbitrierungsinformation in einem Arbitrierungsblock vorgesehen ist.

## Claims

1. A device for data communication between a first host device or a further host device and at least one client device on a shared transmission path comprising:
- a first host device (1), which includes a host application (11);
- at least one further host device (2), which includes a host application (21);
- at least one client device (3, 4, 5, 6, 7), which includes a client application (34, 44, 54, 64, 74);
- a bus control module (8);
- the host devices (1, 2) each having a master application interface module (10, 20) which is linked in the transmission path (9);
- the host devices (1, 2) each having a master application module (14, 24) which connects the particular host application (11, 21) to the assigned master application interface module (10, 20);
- each client device (3, 4, 5, 6, 7) having a client application interface module (30, 40, 50, 60, 70), which is linked in the transmission path (9) and is connected to the assigned client application (34, 44, 54, 64, 74);
- the transmission path (9) being implemented as a data bus representing a ring connector;
- the respective master application interface module (10, 20) of each host device (1, 2) and the respective client application interface module (30, 40, 50, 60, 70) of each client device (3, 4, 5, 6, 7) being connected to one another by the data bus for exchanging data and/or signals with one another;
- the bus control module (8) being implemented to control the access of the host devices (1, 2) to the data bus,
- wherein the bus control module (8) is provided in the ring structure of the data bus and is connected to the respective master application interface module (10, 20) of each host device (1, 2) and the respective client application interface module of each client device (3, 4, 5, 6, 7) by the data bus for exchanging data and/or signals with one another *along an opened communication link* and
- the bus control module (8) is provided with a counter which counts the pulses between the passage of two arbitration frames containing arbitration information and relayed on the data bus wherein the arbitration information contains data on the basis of which the data bus is reserved for a predetermined time interval or for a predetermined data volume for a subsequent data transmission on the data bus along the opened communication link, and
- wherein the bus control module (8) is designed such that it transmits a new arbitration frame in case the number of the counted pulses exceeds a predetermined value in order to release a blocked data bus.

2. The device according to claim 1, wherein
- the bus control module (8) is provided with a comparator circuit which compares the number of the elapsed pulses between the two arbitration frames against a predetermined target number of said pulses and
- when the number of said elapsed pulses exceeds said predetermined target number, the bus control module (8) transmits a new arbitration frame having a deactivated activity bit in order to release the blocked data bus.

3. The device according to claim 1 or 2, wherein the host applications (11, 21) of the first and/or the further host device(s) (1, 2) have a processor.

4. A method of data communication in a device for data communication as claimed in claim 1, 2 or 3 between a first host device (1) or a further host device (2) and at least one client device (3, 4, 5, 6, 7) on a shared transmission path (9) implemented as a data bus representing a ring connection, comprising the following steps:
- opening a communication connection between a host application running on the host device and a client application running on the client device
- transmitting arbitration information on the data bus along the opened communication connection, the arbitration information containing data, on the basis of which the data bus is reserved for a predetermined time interval or for a predetermined data volume for a subsequent data transmission on the data bus along the opened communication connection;
- transmitting data and/or signals between the host application and the client application and/or between the client application and the host application on the data bus along the opened communication connection,
- wherein the passage of an arbitration frame containing the arbitration information on the data bus is monitored by a bus control module in such a way that the pulses between two passages of the arbitration frame are counted, and
- wherein a new arbitration frame having a deactivated activity bit is transmitted by the bus control module when the number of counted pulses exceeds a predetermined value *in order to release a blocked data bus again.*

5. The method according to claim 4, wherein the arbitration information is transmitted as an arbitration block, an arbitration block having arbitration data which includes information about the length of the predetermined time interval or about the extent of the predetermined data volume for the subsequent data transmission.

6. The method according to claim 5, wherein the arbitration block has activity data which includes information about the current state of the transmission path, from which it may be concluded whether the transmission path is currently being used for data transmission.

7. The method according to claim 4, wherein in the event of an access wish of a host application to the transmission path, the following steps are performed:
- the master application interface module assigned to the host application accepts the arbitration block present on the transmission path,
- reads out the activity data,
- checks on the basis of the activity data whether the transmission path is currently free for data transmission,
- writes if the transmission path is free activity data in the arbitration block which indicates use of the transmission path by the host application, and
- transfers the arbitration block to the bus control module via the transmission path;
- upon which the bus control module reserves the transmission path for the access by the host application.

8. The method according to claim 7, wherein after termination of a data transmission, the activity data in the arbitration block is reset by the master application interface module and the transmission path is thus released again.

9. The method according to claim 4,
wherein the arbitration information is provided in an arbitration block.

## Revendications

1. Appareil pour la communication de données entre un premier dispositif hôte ou un autre dispositif hôte et au moins un dispositif client le long d'une voie de transmission commune, l'appareil comprenant les éléments suivants :
- un premier dispositif hôte (1) qui inclut une application hôte (11) ;
- au moins un autre dispositif hôte (2) qui inclut une application hôte (21) ;
- au moins un dispositif client (3, 4, 5, 6, 7), qui inclut une application hôte (34, 44, 54, 64, 74) ;
- un module de commande de bus (8) ;
- dans lequel les dispositifs hôtes (1, 2) comportent chacun un module interface d'application principale (10, 20), qui est intégré dans la voie de transmission (9) ;
- dans lequel les dispositifs hôtes (1, 2) comportent chacun un module d'application principale (14, 24), qui relie l'application hôte respective (11, 21) avec le module interface d'application principale (10, 20) ;
- dans lequel chaque dispositif client (3, 4, 5, 6, 7) comprend un module interface d'application client (30, 40, 50, 60, 70) qui est intégré dans la voie de transmission (9) et qui est relié à l'application client associée (34, 44, 54, 64, 74) ;
- dans lequel la voie de transmission (9) est mise en oeuvre sous forme de bus de données qui forme une liaison circulaire ;
- dans lequel le module interface d'application principale (10, 20) concerné de chaque dispositif hôte (1, 2) et le module interface d'application client (30, 40, 50, 60, 70) correspondant de chaque dispositif client (3, 4, 5, 6, 7) sont reliés l'un à l'autre par le bus de données pour l'échange de données et/ou de signaux ;
- dans lequel le module de commande de bus (8) est mis en oeuvre afin de commander l'accès des dispositifs hôtes (1, 2) au bus de données ;
- dans lequel le module de commande de bus (8) est prévu dans la structure circulaire du bus de données et est relié au module interface d'application principale (10, 20) correspondant de chaque dispositif hôte (1, 2) et au module interface d'application client correspondant de chaque dispositif client (3, 4, 5, 6, 7) au moyen du bus de données pour l'échange de données et/ou de signaux les uns avec les autres le long d'une liaison de communication ouverte ; et
- dans lequel le module de commande de bus (8) est doté d'un compteur qui compte les cycles entre les passages de deux trames d'arbitrage qui contiennent les informations d'arbitrage et qui sont véhiculées vers le bus de données,
- dans lequel les informations d'arbitrage contiennent des données au moyen desquelles le bus de données est réservé pour un intervalle temporel prédéterminé ou pour un volume de données prédéterminé pour une transmission de données successive vers le bus de données le long de la liaison de communication ouverte, et
- dans lequel le module de commande de bus (8) est réalisé de telle façon que, dans le cas où le nombre des cycles comptés dépasse une valeur prédéterminée, il émet une nouvelle trame d'arbitrage, afin de libérer ainsi à nouveau un bus de données bloqué.

2. Appareil selon la revendication 1,
**caractérisé en ce que**
- le module de commande de bus (8) est pourvu d'un comparateur qui compare le nombre de cycles passés entre les deux trames d'arbitrage avec un nombre cible prédéterminé de cycles, et
- **en ce que** le module de commande de bus (8) émet, lorsque le nombre des cycles passés dépasse le nombre cible prédéterminé, une nouvelle trame d'arbitrage avec un bit d'activité désactivé, afin de libérer à nouveau le bus de données bloqué.

3. Appareil selon la revendication 1 ou 2,
**caractérisé en ce que** les applications hôtes (11, 21) du premier et/ou du second dispositif hôte (1, 2) comprennent un processeur.

4. Procédé pour la communication de données dans un appareil pour la communication de données selon la revendication 1, 2 ou 3 entre un premier dispositif hôte (1) ou un autre dispositif hôte (2) et au moins un dispositif client (3, 4, 5, 6, 7) le long d'une voie de transmission commune (9) conçue comme un bus de données formant une liaison circulaire, ledit procédé comprenant les étapes suivantes :
- ouverture d'une liaison de communication entre une application hôte en cours sur le dispositif hôte et une application client en cours sur le dispositif client ;
- transmission d'informations d'arbitrage sur le bus de données le long de la liaison de communication ouverte, de sorte que les informations d'arbitrage contiennent des données au moyen desquelles le bus de données est réservé pour un intervalle temporel prédéterminé ou pour un volume de données prédéterminé pour une transmission de données successive vers le bus de données le long de la liaison de communication ouverte ;
- transmission de données et/ou de signaux entre l'application hôte et l'application client et/ou entre l'application client et l'application hôte sur le bus de données le long de la liaison de communication ouverte ;
- dans lequel le passage d'une trame d'arbitrage, contenant les informations d'arbitrage, sur le bus de données est surveillé par un module de commande de bus de telle façon que les cycles entre deux passages de la trame d'arbitrage sont comptés, et
- dans lequel une nouvelle trame d'arbitrage avec un bit d'activité désactivé est émise par le module de commande de bus quand le nombre des cycles comptés dépasse une valeur prédéterminée, afin de libérer ainsi à nouveau un bus de données bloqué.

5. Procédé selon la revendication 4,
**caractérisé en ce que** les informations d'arbitrage sont transmises sous forme d'un bloc d'arbitrage, et un bloc d'arbitrage contient des données d'arbitrage qui incluent des informations sur la longueur de l'intervalle temporel prédéterminé ou sur l'étendue du volume de données prédéterminé pour la transmission de données successive.

6. Procédé selon la revendication 5,
**caractérisé en ce que** le bloc d'arbitrage comprend des données d'activité qui incluent des informations sur la situation actuelle de la voie de transmission, à partir desquelles il est possible de conclure quant à savoir si la voie de communication est actuellement utilisée pour la transmission de données.

7. Procédé selon la revendication 4,
**caractérisé en ce que** lors d'une demande d'accès d'une application hôte vers la voie de transmission, on exécute les étapes suivantes :
- le module interface d'application principale associé à l'application hôte reprend le bloc d'arbitrage présent sur la voie de transmission,
- il lit les données d'activité,
- il vérifie au moyen des données d'activité si la voie de transmission est actuellement libre pour la transmission de données,
- si la voie de transmission est libre, il écrit des données d'activité dans le bloc d'arbitrage, qui indiquent une utilisation de la voie de transmission par l'application hôte, et
- il remet le bloc d'arbitrage via la voie de transmission au module de commande de bus ;
- suite à quoi le module de commande de bus réserve la voie de transmission pour l'accès par l'application hôte.

8. Procédé selon la revendication 7,
**caractérisé en ce que**, après la fin d'une transmission de données les données d'activité sont à nouveau remises à zéro dans le bloc d'arbitrage par le module interface d'application principale, et ainsi la voie de transmission est à nouveau libérée.

9. Procédé selon la revendication 4,
**caractérisé en ce que** les informations d'arbitrage sont prévues dans un bloc d'arbitrage.
